# EUROPÄISCHE PATENTSCHRIFT

(11) **EP 0 587 191 B1**
(45) Veröffentlichungstag und Bekanntmachung des Hinweises auf die Patenterteilung: **29.03.1995**
(21) Anmeldenummer: 93115014.8
(22) Anmeldetag: 05.04.1990
(51) Int. Cl.: F16L 9/00, B60R 22/18

(54) **Bremsrohr einer Rücklaufsperre eines Rückstrammers für einen Sicherheitsgurt**
Brake pipe preventing reslackening of a seat belt with a belt tensioning system
Tube de freinage d'un blocage antiretour d'un système de rattrapage de jeu pour ceinture de sécurité

(43) Veröffentlichungstag der Anmeldung: 16.03.1994
(62) Teilanmeldung aus: 90106535.9
(73) Patentinhaber: Griesemer, Albert, D-56457 Westerburg (DE)
(72) Erfinder: Griesemer, Albert, D-56457 Westerburg (DE)
(74) Vertreter: Nöth, Heinz, Dipl.-Phys.

(56) Entgegenhaltungen:
- EP-A- 0 255 465
- DE-U- 8 900 013
- US-A- 1 895 133

## Beschreibung

Die Erfindung betrifft ein Bremsrohr einer Rücklaufsperre eines Rückstrammers für einen Sicherheitsgurt, insbesondere Kraftfahrzeugsicherheitsgurt.

Aus dem DE-U-89 00 013 ist eine Sperrvorrichtung für einen Gurtstrammer in einem Kraftfahrzeug bekannt, bei der in einem Bremsrohr ein mit einem Zugseil des Sicherheitsgurtstrammers verbundene Sperreinrichtung in Form einer Rastellipse in einer Richtung (Gurtstrafferrichtung) frei beweglich geführt ist und in entgegengesetzter Richtung in Zusammenwirkung mit der Rohrinnenwand einen Sperrmechanismus bildet.

Aufgabe der Erfindung ist es, das Bremsrohr der eingangs genannten Art so auszugestalten, daß es einen verbesserten Rasteingriff für den Sperrkörper bietet und ein einfaches Herstellungsverfahren für das Bremsrohr zu schaffen.

Zur Lösung dieser Aufgabe ist das Bremsrohr erfindungsgemäß gekennzeichnet durch ein zylinderförmig zu einem Rohrkörper gebogenes bandförmiges Ausgangsmaterial, in dessen die Rohrinnenseite bildende Fläche um die Rohrachse umlaufende Rillen eingeformt sind und das an seiner Stoßstelle verschweißt ist.

Zur Herstellung des Bremsrohres dient erfindungsgemäß ein Verfahren, das dadurch gekennzeichnet ist, daß die Rillen geradlinig in das bandförmige Rohrausgangsmaterial durch Walzen eingeformt werden und daß das bandförmige Ausgangsmaterial zylinderförmig zum Rohrkörper gebogen wird.

Das Bremsrohr kann in den Rückstrammer integriert sein. Es ist jedoch auch möglich, das Bremsrohr gesondert vom Rückstrammer anzuordnen.

Anhand der Figuren wird an einem Ausführungsbeispiel die Erfindung noch näher erläutert. Es zeigt:
- Fig. 1: einen Querschnitt durch die Innenwand des Bremsrohres; und
- Fig. 2: eine Walzvorrichtung, welche bei der Herstellung des Bremsrohres zum Einsatz kommt.

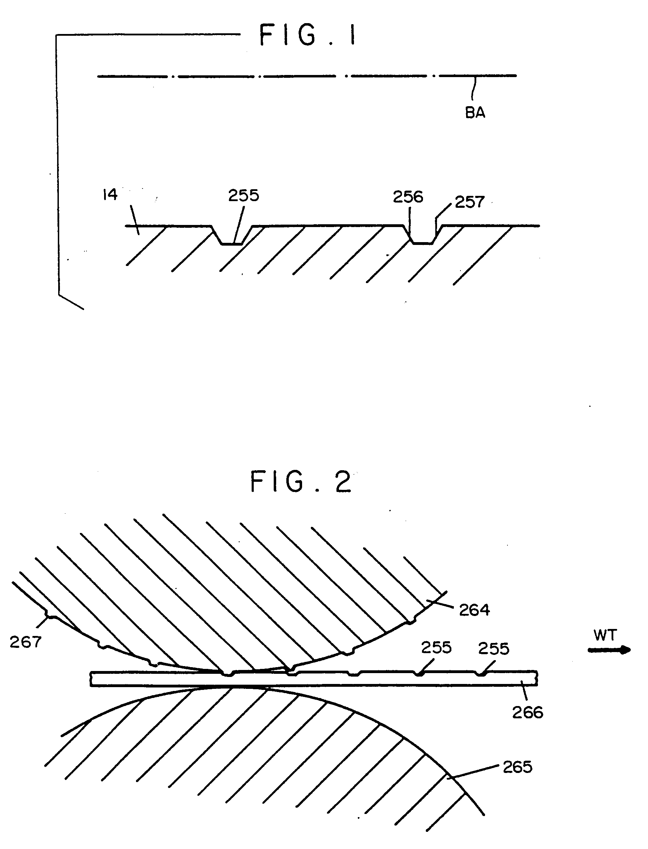

Wie die Fig. 1 zeigt, ist in die Innenwand eines Bremsrohres 14 eine Rillenstruktur aus Rillen 255 eingeformt, die in zur Bremsrohrachse BA senkrechten Ebene angeordnet sind. Die Rillen 255 verlaufen parallel zueinander an der Rohrinnenseite. Diese Riffelung gewährleistet für einen Sperr- oder Rastkörper, z.B. eine Rastellipse einer Rücklaufsperre, eine Verankerungsmöglichkeit an einer Kante des Rastkörpers, so daß der Rastkörper dann in die Klemmstellung verschwenkt wird. Bevorzugt besitzt der Querschnitt der Rille 255 abgeschrägte Seitenflanken 256 und 257.

Beim dargestellten Ausführungsbeispiel ist der Querschnitt der Rille 255 im wesentlichen U-förmig mit den abgeschrägten Seitenflanken 256 und 257. Es ist jedoch auch möglich, den Querschnitt der Rille V-förmig auszubilden. Auch bei einer U-Form der Rille erreicht man eine ausreichende Verankerung an der Kante des Rastkörpers bzw. der Rastellipse, so daß sich dieser bzw. diese für die Rücklaufsperrung des Zugseiles im Bremsrohr 14 querstellen kann.

In der Fig. 2 ist eine Vorrichtung zum Einbringen der Rillen 255, welche die Riffelung der Bremsrohrinnenwand bilden, dargestellt. Hierzu wird bandförmiges Rohrausgangsmaterial 266 zwischen zwei Walzen, von denen die eine als Profilwalze 264 und die andere als Gegendruckwalze 265 ausgebildet sind, hindurchgeführt. Die Profilwalze 264 ist an ihrer Mantelfläche mit entsprechenden Vorsprüngen 267 versehen, durch die in das Rohrausgangsmaterial 266 die Rillen 255 beim Walzen angeformt werden. Beim dargestellten Ausführungsbeispiel erstrecken sich die Rillen 255 senkrecht zur Transportrichtung WT beim Walzen.

Anschließend wird das bandförmige Rohrausgangsmaterial in einer nicht näher dargestellten bekannten Zylindermantelbiegemaschine zu einem Rohr geformt und an der Stoßstelle verschweißt. Derartige Bandstahl- bzw. Breitband- bzw. Blechbiegemaschinen, welche das Blech zu einem Zylindermantel biegen und an der Stoßstelle verschweißen, sind bekannt und werden daher nicht näher erläutert.

Es ist natürlich auch möglich, die Profilwalze 264 so auszugestalten, daß die Profilvorsprünge sich nicht parallel zur Walzenachse erstrecken, wie das beim dargestellten Ausführungsbeispiel der Fall ist, sondern am Walzenmantelumfang als umlaufende ringförmige Vorsprünge vorgesehen sind. Das Ausgangsbandmaterial 266 für das herzustellende Bremsrohr besitzt dann etwa die Breite, welche der herzustellenden Rohrlänge entspricht.

## Patentansprüche

1. Bremsrohr einer Rücklaufsperre eines Rückstrammers für einen Sicherheitsgurt,
**gekennzeichnet,**
durch ein zylinderförmig zu einem Rohrkörper (14; 231) gebogenes bandförmiges Ausgangsmaterial (266), in dessen die Rohrinnenseite bildende Fläche um die Rohrachse (BA) umlaufende Rillen (255) eingeformt sind und das an seiner Stoßstelle verschweißt ist.

2. Verfahren zur Herstellung eines Bremsrohres nach Anspruch 1, dadurch gekennzeichnet, daß die Rillen geradlinig in das bandförmige Rohrausgangsmaterial durch Walzen eingeformt werden und daß das bandförmige Ausgangsmaterial zylinderförmig zum Rohrkörper gebogen wird.

## Claims

1. A braking tube of a return motion blocking means of a tensioner for a safety belt, characterised by a starting material (266) in strip form, which is bent into a cylindrical form to provide a tube body (14; 231), the surface of the starting material which forms the inside of the tube having formed therein grooves (255) which extend around the tube axis (BA), and the starting material being welded at its junction.

2. A process for the production of a braking tube according to claim 1 characterised in that the grooves are rectilinearly formed by rollers in the starting material of the tube, in strip form, and that the starting material in strip form is bent into a cylindrical form to provide the tube body.

## Revendications

1. Tube-frein d'un enclenchement au retour d'un enrouleur-dérouleur pour une ceinture de sécurité, caractérisé par un matériau initial en forme de bande (266), plié en cylindre en un corps tubulaire (14), des rainures (255) périphériques à l'axe du tube (BA) étant conformées dans la surface, formant le côté interne du tube, de ce matériau, et ce dernier étant soudé à son emplacement de joint.

2. Procédé de fabrication d'un tube-frein suivant la revendication 1, caractérisé en ce que les rainures sont conformées d'une manière rectiligne par des cylindres dans le matériau initial en bande, et en ce que le matériau initial en bande est plié en forme de cylindre en un corps tubulaire.
